# EUROPEAN PATENT APPLICATION

(11) **EP 4 535 717 A1**
(43) Date of publication of application: **09.04.2025**
(21) Application number: 23814959.5
(22) Date of filing: 17.05.2023
(51) Int. Cl.: H04L 9/32

(54) **IDENTITY VERIFICATION METHOD FOR HANDSHAKE PROCESS FOR TLCP PROTOCOL**

(30) Priority: 30.05.2022 CN 202210602389
(71) Applicant: Alipay (Hangzhou) Information Technology Co., Ltd., Hangzhou, Zhejiang 310000 (CN)
(72) Inventor: ZHANG, Chenglong, Hangzhou, Zhejiang 310000 (CN); YANG, Yang, Hangzhou, Zhejiang 310000 (CN)
(74) Representative: Winter, Brandl - Partnerschaft mbB
(86) International application number: PCT/CN2023/094756
(87) International publication number: WO 2023/231774

(57) **Abstract**

One or more embodiments of this specification provide an identity verification method in a handshake process for a TLCP protocol. The method includes: A client sends a client hello message to a serving end. The client hello message includes a certificate compression function field, and the certificate compression function field indicates that the client supports a certificate compression function. The serving end sends a serving end certificate message to the client when the serving end receives the client hello message. The serving end certificate message includes a compressed serving end certificate. In response to the serving end certificate message, the client decompresses the compressed serving end certificate included in the message, and performs identity verification on the serving end based on an obtained decompressed serving end certificate.

## Description

### TECHNICAL FIELD

One or more embodiments of this specification relate to the field of communication technologies, and in particular, to an identity verification method in a handshake process for a TLCP protocol.

### BACKGROUND

When a communication connection is established based on a communication protocol, identities of two parties that establish the communication connection may need to be verified, to ensure security of transmitted data. Two parties that establish a communication channel or one of the parties needs to send a certificate to the peer party. A receiver of the certificate verifies an identity of a sender of the certificate based on the certificate.

In a weak network environment, for example, in an area with low network quality such as an underground shopping mall, a garage, or a metro, or in a network environment in which network congestion occurs, when a client and a serving end perform a TLCP handshake, if a certificate needs to be transmitted, a handshake process of TCLP negotiation further consumes a large amount of time.

### SUMMARY

In view of this, one or more embodiments of this specification provide an identity verification method in a handshake process for a TLCP protocol.

To achieve the above-mentioned objective, one or more embodiments of this specification provide the following technical solutions: According to a first aspect of one or more embodiments of this specification, an identity verification method in a handshake process for a TLCP protocol is provided, including: A client sends a client hello message to a serving end. The client hello message includes a certificate compression function field, and the certificate compression function field indicates that the client supports a certificate compression function. The serving end sends a serving end certificate message to the client when the serving end receives the client hello message. The serving end certificate message includes a compressed serving end certificate. In response to the serving end certificate message, the client decompresses the compressed certificate included in the serving end certificate message, and performs identity verification on the serving end based on an obtained decompressed serving end certificate.

According to a second aspect of one or more embodiments of this specification, an identity verification method in a handshake process is provided, applied to a client. The method includes: sending a client handshake message to a serving end, where the client handshake message includes a certificate compression function field, and the certificate compression function field indicates that the client supports a certificate compression function; receiving a serving end certificate message sent by the serving end, where the serving end certificate message includes a compressed serving end certificate; and in response to the serving end certificate message, decompressing the compressed serving end certificate included in the serving end certificate message, and performing identity verification on the serving end based on an obtained decompressed certificate.

According to a third aspect of one or more embodiments of this specification, an identity verification method in a handshake process is provided, applied to a serving end. The method includes: receiving a client handshake message sent by a client, where the client handshake message includes a certificate compression function field, and the certificate compression function field indicates that the client supports a certificate compression function; and sending a serving end certificate message to the client in response to the client handshake message, where the serving end certificate message includes a compressed serving end certificate, so that the client performs identity verification on the serving end based on the serving end certificate.

According to a fourth aspect of one or more embodiments of this specification, a computer-readable storage medium is provided. The computer-readable storage medium stores a computer program, and when the program is executed by a processor, steps of the method according to the second aspect or the third aspect are implemented.

According to a fifth aspect of one or more embodiments of this specification, an electronic device is provided, including a memory, a processor, and a computer program that is stored in the memory and that is capable of running on the processor. When the processor executes the program, steps of the method according to the second aspect or the third aspect are implemented.

In the technical solutions provided in this specification, in the method in which the client hello message sent by the client to the serving end carries the certificate compression function field, to indicate that the client supports the certificate compression function, when the serving end receives the hello message, the serving end certificate is compressed and then sent to the client. The client decompresses the compressed serving end certificate, and performs identity verification on the serving end based on the serving end certificate obtained through decompression. According to the method, a bandwidth occupied by transmission of a certificate in the handshake process for the TLCP protocol can be reduced, and negotiation efficiency of the handshake process can be improved.

### BRIEF DESCRIPTION OF DRAWINGS

FIG. 1 is a schematic flowchart illustrating an identity verification method in a handshake process for a TLCP protocol, according to an example embodiment of this specification;
FIG. 2 is a schematic diagram illustrating interaction between two parties of a serving end and a client in a handshake process based on a TLCP protocol, according to an example embodiment of this specification;
FIG. 3 is a schematic flowchart illustrating an identity verification method that is in a handshake process and that is applied to a client, according to an example embodiment of this specification;
FIG. 4 is a schematic flowchart illustrating an identity verification method that is in a handshake process and that is applied to a serving end, according to an example embodiment of this specification;
FIG. 5 is a schematic structural diagram illustrating an electronic device, according to an example embodiment of this specification;
FIG. 6 is a schematic diagram illustrating an identity verification apparatus that is in a handshake process and that is applied to a client, according to an example embodiment of this specification; and
FIG. 7 is a schematic diagram illustrating an identity verification apparatus that is in a handshake process and that is applied to a serving end, according to an example embodiment of this specification.

### DESCRIPTION OF EMBODIMENTS

Example embodiments are described in detail here, and examples of the example embodiments are presented in the accompanying drawings. When the following description relates to the accompanying drawings, unless specified otherwise, the same numbers in different accompanying drawings represent the same or similar elements. Implementations described in the following example embodiments do not represent all implementations consistent with one or more embodiments of this specification. On the contrary, the implementations are merely examples of apparatuses and methods that are described in the appended claims in detail and consistent with some aspects of one or more embodiments of this specification.

It is worthwhile to note that the steps of the corresponding method are not necessarily performed in the order shown and described in this specification in other embodiments. In some other embodiments, the method can include more or fewer steps than those described in this specification. In addition, a single step described in this specification may be split into a plurality of steps in other embodiments for description; and a plurality of steps described in this specification may be combined into a single step in other embodiments for description.

When a communication connection is established based on a communication protocol, identities of two parties that establish the communication connection may need to be verified, to ensure security of transmitted data. Two parties that establish a communication channel or one of the parties needs to send a certificate to the peer party. A receiver of the certificate verifies an identity of a sender of the certificate based on the certificate.

For example, in a process of establishing a communication connection based on a transport layer cryptography protocol (TCLP) protocol, two parties that establish the connection may need to send a certificate to the peer party to perform identity verification. The TLCP protocol is a transport layer cryptography protocol based on a national standard. The protocol is applicable to development, detection, management, and use of transport layer cryptography protocol related products such as SSL VPN gateways and a browsers. For two parties of a serving end and a client that establish the communication connection, a TLCP handshake needs to be performed before a communication channel is established to transmit data. In a handshake process, information such as a certificate provided by the serving end and/or the client to the peer party needs to be provided based on an encryption algorithm selected through negotiation, to verify an identity of the peer party and further perform communication data encryption.

Therefore, in the handshake process, transmission of the certificate occupies a main transmission bandwidth. A size of the certificate affects a transmission speed, and consequently, a time of the handshake process is prolonged. A larger quantity of certificates that need to be transmitted have a larger size, and lead to a higher delay and lower negotiation efficiency.

To reduce the time consumed by the handshake process and improve negotiation efficiency, this specification provides an identity verification method. In a certificate transmission process, when both parties that negotiate support a certificate compression function, the serving end sends a compressed serving end certificate to the client, and the client decompresses the compressed serving end certificate and verifies an identity of the serving end. In the method, a bandwidth occupied by the certificate that needs to be transmitted in the handshake process can be reduced, and negotiation efficiency of the handshake process is improved.

Certainly, the method can also be applied to a handshake process initiated based on another communication protocol, for example, a transport layer security (TLS) protocol or a secure sockets layer (SSL) protocol. This is not specifically limited in this specification.

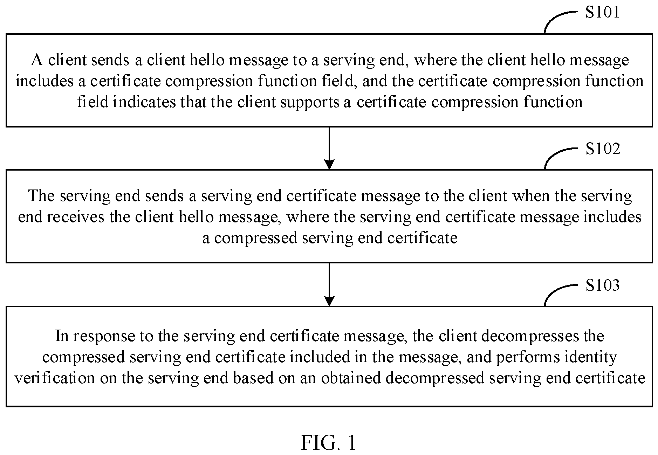

With reference to FIG. 1, the following describes an identity verification method that is in a handshake process for a TLCP protocol and that is provided in this specification. As shown in FIG. 1, the method can include the following steps S101 to S103.

S101: A client sends a client hello message (Client Hello) to a serving end, where the client hello message includes a certificate compression function field, and the certificate compression function field indicates that the client supports a certificate compression function.

A handshake for establishing a communication connection is actively initiated by the client. In a conventional handshake process of establishing the connection, several handshake packets need to be sent between the client and the serving end. Different types of handshake packets have different functions. The client first sends the client hello message to the serving end, to notify the serving end of information such as a protocol version and a cipher suite supported by the client, so that a serving end makes selection. The information further includes a random number generated by the client.

In an example embodiment of this specification, the client hello message sent by the client to the serving end further includes the certificate compression function field, and the certificate compression function field indicates that the client supports the certificate compression function. When the client hello message includes the field, it indicates that the client supports the certificate compression function.

In an example embodiment of this specification, a value of the certificate compression function field is used to indicate a compression algorithm supported by the client. For example, a predefined integer represents a specific compression algorithm. For example, an integer 1 represents a ZLIB compression algorithm, an integer 2 represents a GZIP compression algorithm, etc. The client can support at least one compression algorithm.

In another example embodiment of this specification, a value of the certificate compression function field can be used to indicate whether the client supports the certificate compression function. If the client supports the certificate compression function, the field is a preset value; or if the client does not support the certificate compression function, the field is another value different from the preset value.

S102: The serving end sends a serving end certificate message to the client when the serving end receives the client hello message, where the serving end certificate message includes a compressed serving end certificate.

Because the client needs to verify an identity of the serving end based on the serving end certificate, after receiving the client hello message sent by the client, the serving end can send the compressed serving end certificate to the client in the serving end certificate message because the message includes the certificate compression function field, and the certificate compression field indicates that the client supports the certificate compression function. In an asymmetric encryption communication process, to avoid an attack of an intermediate person (a public key is intercepted and replaced by a third party, and then the third party can pretend to be the serving end to communicate with the client), in a process in which the serving end sends the public key to the client, the serving end combines the public key into a digital certificate through a trusted certificate authority (CA), and then the serving end sends the public key together with the certificate to the client. A private key is stored by the serving end to ensure security.

Usually, a certificate obtained through the CA is dual certificates, including a signature certificate and an encryption certificate. The signature certificate is mainly used to sign user information, to ensure non-repudiation of the information. The signature certificate is obtained after a signature obtained after the serving end performs encryption based on the private key is signed by the CA. The encryption certificate is mainly used to encrypt information transmitted by a user, to ensure authenticity and integrity of the information. The encryption certificate is obtained after encryption information obtained after the serving end performs encryption based on the public key of the client is signed by the CA.

In an example embodiment of this specification, the serving end certificate further includes an intermediate CA certificate and/or a root CA certificate.

In an example embodiment of this specification, if the value of the certificate compression function field in the client hello message is used to indicate the compression algorithm supported by the client, the serving end selects, from the compression algorithm supported by the client, a target compression algorithm supported by the serving end, to generate the compressed serving end certificate. In addition, a certificate compression function confirmation field included in a serving end hello message sent to the client in response to the client hello message is used to notify the client of the target compression algorithm selected by the serving end. In addition, after the serving end certificate is compressed based on the target compression algorithm, the compressed serving end certificate is sent to the client based on serving end certificate information. For example, if the certificate compression function field in the client hello message indicates that the client supports a compression algorithm A, a compression algorithm B, a compression algorithm C, and a compression algorithm D, and the serving end supports the compression algorithm B, the compression algorithm C, a compression algorithm E, and a compression algorithm F, the serving end can determine, based on the certificate compression function field, that the compression algorithm B or the compression algorithm C is the target compression algorithm. In an example embodiment of this specification, a compression algorithm supported by both parties can be selected based on a preset priority sequence. For example, if a preset priority sequence of the serving end is (1) the compression algorithm B, (2) the compression algorithm C, (3) the compression algorithm E, and (4) the compression algorithm F, the compression algorithm B is selected as the target compression algorithm based on the preset priority sequence. Certainly, the compression algorithm supported by both parties can be randomly selected as the target compression algorithm.

In another example embodiment of this specification, it is assumed that both parties that perform a handshake determine a preset compression algorithm, and the value of the certificate compression function field is used to indicate whether the client supports the certificate compression function. If the client supports the certificate compression function, the serving end can compress the serving end certificate based on the preset compression algorithm without a need to negotiate with the client, to generate the compressed serving end certificate.

After receiving the serving end certificate message, the client uses the serving end certificate to perform identity verification on the serving end.

S103: In response to the serving end certificate message, the client decompresses the compressed certificate included in the message, and performs identity verification on the serving end based on an obtained decompressed serving end certificate.

In an example embodiment of this specification, if the serving end notifies, based on the compression algorithm in the serving end hello message, the client of the target compression algorithm used when the serving end compresses the serving end certificate, the client decompresses the compressed serving end certificate in the received serving end certificate message based on the target compression algorithm, and uses the decompressed serving end certificate to perform identity verification on the serving end. Specifically, the client performs identity verification on the serving end based on the root CA certificate or a certificate chain generated based on the root CA certificate and the intermediate CA certificate. The root CA certificate and the intermediate CA certificate can be preset by the client, or received by the client from the serving end.

In an example embodiment of this specification, if the value of the certificate compression function field in the client hello message is used to indicate the compression algorithm supported by the client, the serving end needs to select, as the target compression algorithm from the compression algorithm supported by the client, a compression algorithm also supported by the serving end, to compress the serving end certificate; and needs to notify the client of the selected target compression algorithm based on the certificate compression function confirmation field in the serving end hello message. In this case, if the client parses the certificate compression function confirmation field in the received serving end hello message, and when the value of the certificate compression function confirmation field indicates that the target compression algorithm does not belong to the compression algorithm supported by the client or a quantity of target compression algorithms is greater than 1, it is proved that the compression algorithm supported by the serving end is not one of the compression algorithms supported by the client, or the serving end does not correctly select a target compression algorithm, both of the two cases cause a failure of negotiation of the compression algorithm. Therefore, when such a case is found, the client needs to send an alarm message to the serving end, to notify the serving end that negotiation of the compression algorithm fails.

In an example embodiment of this specification, when either of the client or the serving end does not support the certificate compression function, the serving end can directly send, to the client, a serving end certificate message that carries an uncompressed serving end certificate. The client does not need to perform decompression, and can directly parse the serving end certificate and verify the identity of the serving end based on the serving end certificate.

In an example embodiment of this specification, if the serving end needs to verify an identity of the client, the serving end sends a certificate request message to the client. When the client receives the certificate request message, the client sends a client certificate message to the serving end. The client certificate message includes a compressed client certificate, and sends a certificate verification message to the serving end. The certificate verification message includes a client signature. After receiving the client certificate message, the serving end decompresses the compressed client certificate included in the message, and performs identity verification on the client based on an obtained decompressed certificate and the client signature included in the received certificate verification message. When the client determines the corresponding target compression algorithm based on the value of the certificate compression function confirmation field in the serving end hello message, the client certificate is obtained by the client by performing compression processing based on the target compression algorithm.

In the method, the serving end certificate or the client certificate is compressed based on the same compression algorithm obtained through negotiation, and a compressed certificate is transmitted, to reduce a transmission bandwidth occupied in a certificate transmission process, accelerate a certificate transmission speed, and improve negotiation efficiency.

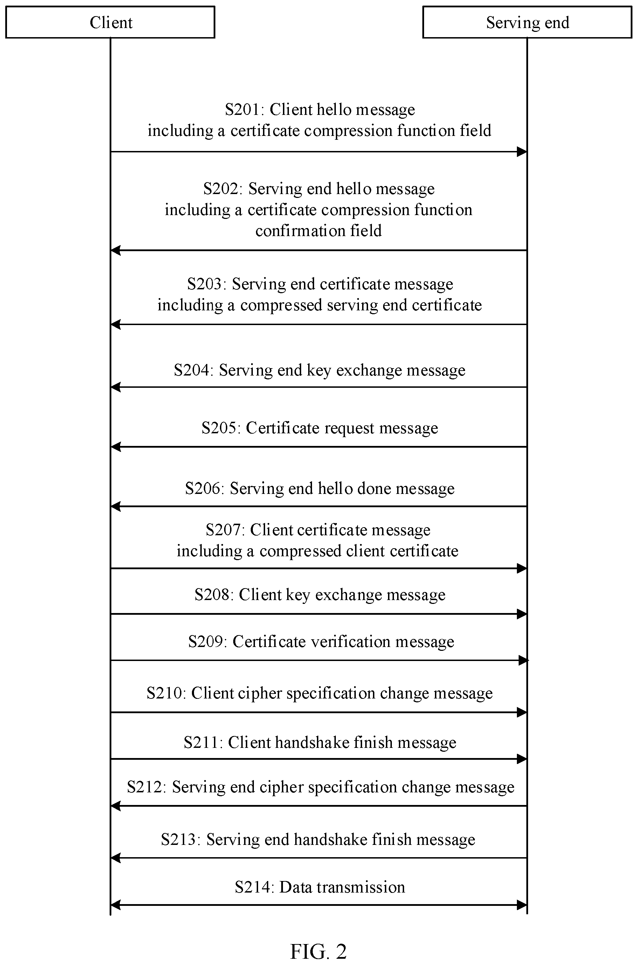

For ease of understanding, the following further describes the technical solutions of this application with reference to the specific embodiments in FIG. 2. FIG. 2 is a schematic diagram illustrating interaction between two parties of a serving end and a client in a handshake process based on a TLCP protocol, according to an example embodiment of this specification. Two parties that establish a communication connection based on the TLCP protocol are respectively the serving end and the client. The handshake process mainly involves the following steps S201 to S214.

S201: The client sends a client hello message (Client Hello) to the serving end, where the information is transmitted in a plaintext, and includes information such as version information, an encryption suite candidate list, and a client random number (Random1), the client hello message includes a certificate compression function field (tlcpext_Client_compress field), and the field lists a certificate compression algorithm supported by the client (including a ZLIB compression algorithm represented by an integer 1 and a GZIP compression algorithm represented by an integer 2).

S202: After receiving the client hello message, the serving end sends a serving end hello message (Serving end Hello), where the message includes information such as a protocol version selected by the serving end, an encryption suite, and a serving end random number (Random2), the serving end hello message includes a certificate compression function confirmation field (tlepext_Client_compress field), and the field indicates that the serving end selects, from the compression algorithm supported by the client, a target compression algorithm supported by the serving end, to generate a compressed serving end certificate. In this embodiment, the serving end selects the ZLIB algorithm as the target compression algorithm.

S203: The serving end needs to send the serving end certificate to the client based on the selected encryption suite, to perform identity verification on the serving end. After the target compression algorithm is also determined in step S202, the serving end certificate is compressed based on the negotiated compression algorithm, and serving end certificate information (Certificate) including the compressed serving end certificate is sent to the client.

S204: The serving end sends a serving end key exchange message (Serving end Key Exchange) to the client, and based on an encryption suite type selected through negotiation based on the client hello message and the serving end hello message, the serving end needs to send other information required for establishing a data security transmission connection. For example, if a DH algorithm is selected for encryption, in this step, the serving end needs to send, to the client, a DH parameter used by the serving end. Certainly, this step is not necessary. For example, if an RSA algorithm is used for encryption, no temporary parameter needs to be exchanged. In this case, step S204 can be omitted.

S205: Send a certificate request message (Certificate Verify) if the serving end needs to perform identity verification on the client, where the certificate request message is used to request the client to report the client certificate. Certainly, this step can be omitted in a scenario in which identity verification does not need to be performed on the client.

S206: After sending of the message in the above-mentioned step is completed, the serving end sends a serving end hello done (serving end hello Done) message to the client, to notify the client that a serving end hello process ends. The serving end starts a subsequent step after the client verifies the serving end certificate.

After receiving the message sent by the serving end in the above-mentioned step, the client decompresses the compressed serving end certificate in the serving end certificate message received in step S203. A decompression algorithm used for decompression is the target decompression algorithm determined by the serving end in step S202. After decompression is performed based on the target decompression algorithm, the serving end certificate is obtained. The client verifies validity of the serving end certificate. If the serving end certificate is valid, a public key in the serving end certificate is extracted.

S207: If the serving end sends the certificate request message in step S205, the client sends the client certificate message to the serving end, so that the serving end performs identity verification on the client based on the client certificate. In this process, the client certificate message carries the compressed client certificate obtained through compression based on the target compression algorithm determined in step S202.

S208: After receiving the serving end certificate sent by the serving end, the client verifies validity of the serving end certificate through a CA, extracts a serving end public key in the certificate after verification succeeds, generates a random number 3 (Random3), and encrypts the random number 3 by using the serving end public key, to obtain a pre-master key. The pre-master key is sent to the serving end based on a client key exchange message (Client Key Exchange).

S209: The client sends a certificate verification message (Certificate Verify) to the serving end, where the message is used by the serving end to perform identity verification on the client. In an example embodiment of this specification, the verification message includes a client signature. The serving end verifies the identity of the client based on the client signature and the client certificate. The certificate verification message is sent when the client sends the client certificate message to the serving end in step S207.

In this case, the client and the serving end obtain three groups of random numbers Random 1+Random2+Random3 through negotiation. In addition, both parties generate a key based on a negotiated encryption algorithm, and the key is a key for symmetric encryption in a subsequent message transmission process.

S210: The client sends a client cipher specification change message (Change Cipher Spec) to the serving end, to notify the serving end that a subsequent message is encrypted based on the key obtained through negotiation in the above-mentioned step.

S211: The client sends a client handshake finish message (Finished) to the serving end, to verify whether a key exchange succeeds, and verifies integrity of the handshake process. A handshake message is encrypted based on the encryption suite and the key that are obtained through negotiation in the above-mentioned process. A specific verification process is as follows: After receiving the message, the serving end decrypts the message by using the key, and a decryption success proves that a process of the handshake step is successful and complete.

S212: The serving end sends a serving end cipher specification change message to the client, to notify the client that a subsequent message is encrypted based on the key obtained through negotiation in the above-mentioned step.

S213: The serving end sends a serving end handshake finish message to the client, where for a function of the handshake finish message, references can be made to step S211. After sending a handshake finish message to the peer end and receiving a handshake finish message sent by the peer end, the two parties can perform encrypted transmission of data by using the key obtained through negotiation in the above-mentioned step. It is equivalent to successfully establishing a connection between the serving end and the client.

S214: The serving end or the client transmits data through a secure connection established through negotiation in the above-mentioned step.

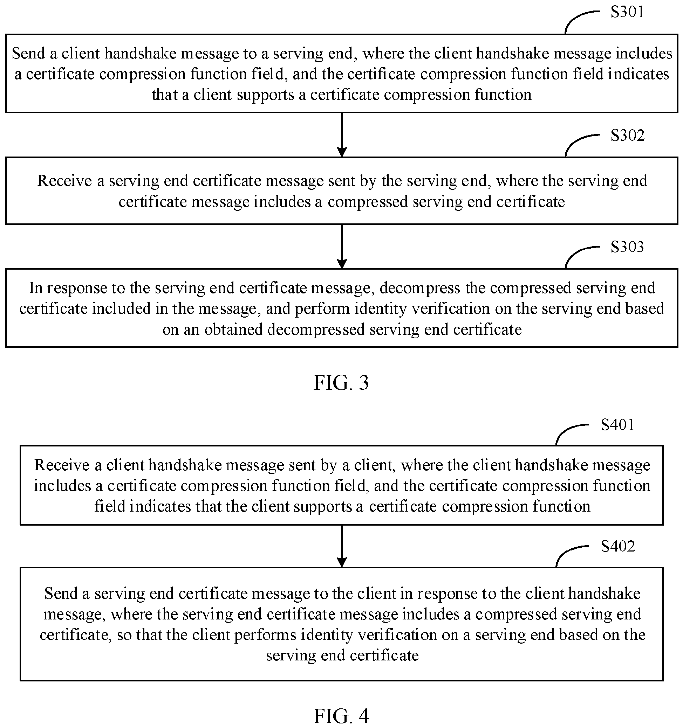

In an example embodiment of this specification, an identity verification method in a handshake process is further provided, applied to a client. The method includes the following steps shown in FIG. 3: S301: Send a client handshake message to a serving end, where the client handshake message includes a certificate compression function field, and the certificate compression function field indicates that the client supports a certificate compression function. S302: Receive a serving end certificate message sent by the serving end, where the serving end certificate message includes a compressed serving end certificate. S303: In response to the serving end certificate message, decompress the compressed serving end certificate included in the message, and perform identity verification on the serving end based on an obtained decompressed serving end certificate.

When the handshake process is a handshake process used for a TLCP protocol, an SSL protocol, or a TLS protocol, the client handshake message is a client hello message. Certainly, when the handshake process is a handshake process based on another protocol, the handshake message can be another type of message. This is not specifically limited in this specification.

In an example embodiment of this specification, a value of the certificate compression function field in step S301 is used to indicate a compression algorithm supported by the client. The client receives a serving end handshake message sent by the serving end to the client in response to the client handshake message. The serving end handshake message includes a certificate compression function confirmation field, a value of the field corresponds to a target compression algorithm, and the target compression algorithm is a target compression algorithm that is selected by the serving end from the compression algorithm supported by the client, that is supported by the serving end, and that is used to generate the compressed serving end certificate. The decompressed certificate is obtained by the client by performing decompression processing based on the target compression algorithm.

In an example embodiment of this specification, the client parses the certificate compression function confirmation field in the received serving end handshake message, and sends an alarm message to the serving end when the value of the certificate compression function confirmation field indicates that the target compression algorithm does not belong to the compression algorithm supported by the client or a quantity of target compression algorithms is greater than 1. The alarm message is used to notify the serving end that negotiation of the target compression algorithm fails.

In an example embodiment of this specification, the value of the certificate compression function field in step S301 is used to indicate whether the client supports the certificate compression function. If the serving end and the client presets a preset compression algorithm, when the client supports the certificate compression function, the serving end compresses the serving end certificate based on the preset compression algorithm, and sends the compressed serving end certificate to the client. After receiving the compressed serving end certificate, the client decompresses the compressed serving end certificate based on the preset compression algorithm.

In an example embodiment of this specification, when the client or the serving end does not support a certificate compression function, the client receives a serving end certificate message that carries an uncompressed serving end certificate and that is sent by the serving end.

In an example embodiment of this specification, when the client receives the certificate request message, the client sends a client certificate message to the serving end, where the client certificate message includes a compressed client certificate, and sends a certificate verification message to the serving end, where the certificate verification message includes a client signature.

In an example embodiment of this specification, the client certificate is obtained by the client by performing compression processing based on the preset compression algorithm; or when the client determines the corresponding target compression algorithm based on the value of the certificate compression function confirmation field in the serving end handshake message, the client certificate is obtained by the client by performing compression processing based on the target compression algorithm.

This specification further provides an identity verification method in a handshake process, applied to a serving end. The method includes steps shown in FIG. 4: S401: Receive a client handshake message sent by a client, where the client handshake message includes a certificate compression function field, and the certificate compression function field indicates that the client supports a certificate compression function. S402: Send a serving end certificate message to the client in response to the client handshake message, where the serving end certificate message includes a compressed serving end certificate, so that the client performs identity verification on the serving end based on the serving end certificate.

When the handshake process is a handshake process used for a TLCP protocol, an SSL protocol, or a TLS protocol, the serving end handshake message is a client hello message. Certainly, when the handshake process is a handshake process based on another protocol, the serving end handshake message can be another type of message. This is not specifically limited in this specification.

In an example embodiment of this specification, a value of the certificate compression function field in step S401 is used to indicate a compression algorithm supported by the client. The serving end selects, from the compression algorithm supported by the client, a target compression algorithm supported by the serving end, to generate the compressed serving end certificate; and sends a serving end handshake message to the client in response to the client handshake message. The serving end handshake message includes a certificate compression function confirmation field, and a value of the certificate compression function confirmation field corresponds to the target compression algorithm.

In an example embodiment of this specification, the value of the certificate compression function field in step S401 is used to indicate whether the client supports the certificate compression function. The compressed certificate is generated by the serving end by performing compression processing based on the preset compression algorithm. The decompressed certificate is obtained by the client by performing decompression processing based on the preset compression algorithm.

In an example embodiment of this specification, when the serving end or the client does not support the certificate compression function, the serving end sends, to the client, a serving end certificate message that carries an uncompressed certificate.

In an example embodiment of this specification, when an identity of the client needs to be verified, the serving end sends a certificate request message to the client; and receives a client certificate message and a certificate verification message that are sent by the client in response to the certificate request message. The client certificate message includes a compressed client certificate, and the certificate verification message includes a client signature. After the above-mentioned messages are received, in response to the client certificate message, the serving end decompresses the compressed certificate included in the message, and performs identity verification on the client based on an obtained decompressed client certificate and the client signature.

In an example embodiment of this specification, the client certificate is obtained by the client by performing compression processing based on the preset compression algorithm; or when the client determines the corresponding target compression algorithm based on the value of the certificate compression function confirmation field in the serving end handshake message, the client certificate is obtained by the client by performing compression processing based on the target compression algorithm.

For the listed identity verification method in the handshake process, references can be made to the embodiment corresponding to FIG. 1 or the specific embodiment corresponding to FIG. 2 for understanding.

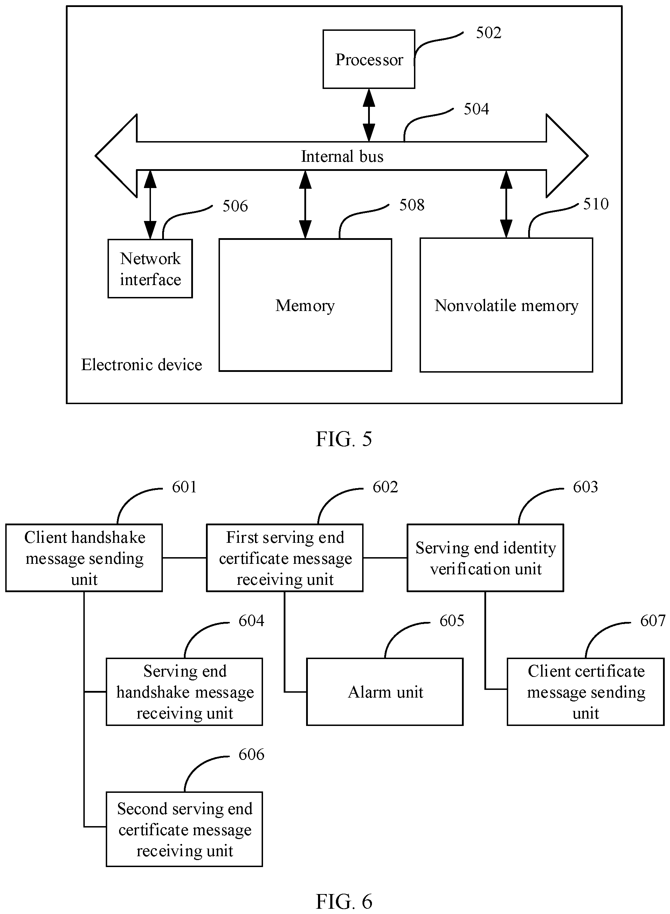

FIG. 5 is a schematic structural diagram illustrating an electronic device, according to an example embodiment of this specification. As shown in FIG. 5, at a hardware level, the device includes a processor 502, an internal bus 504, a network interface 506, a memory 508, and a nonvolatile memory 510. Certainly, the hardware required by another function can be further included. The processor 502 reads a corresponding computer program from the nonvolatile memory 510 to the memory 508 for running, to logically form an identity verification apparatus in a handshake process. Certainly, in addition to a software implementation, one or more embodiments of this specification do not rule out other implementations, such as an implementation of a logic device or a combination of software and hardware. In other words, an execution body of the following processing procedure is not limited to each logical unit, and can be hardware or a logic device.

In response to the above-mentioned method embodiments, this specification further provides an identity verification apparatus in a handshake process, applied to a client. As shown in FIG. 6, the apparatus includes: a client handshake message sending unit 601, configured to send a client handshake message to a serving end, where the client handshake message includes a certificate compression function field, and the certificate compression function field indicates that the client supports a certificate compression function; a first serving end certificate message receiving unit 602, configured to receive a serving end certificate message sent by the serving end, where the serving end certificate message includes a compressed serving end certificate; and a serving end identity verification unit 603, configured to: in response to the serving end certificate message, decompress the compressed serving end certificate included in the message, and perform identity verification on the serving end based on an obtained decompressed serving end certificate.

Optionally, a value of the certificate compression function field is used to indicate a compression algorithm supported by the client, and the apparatus further includes: a serving end handshake message receiving unit 604, configured to receive a serving end handshake message sent by the serving end to the client in response to the client handshake message. The serving end handshake message includes a certificate compression function confirmation field, a value of the certificate compression function confirmation field corresponds to a target compression algorithm, and the target compression algorithm is a target compression algorithm that is selected by the serving end from the compression algorithm supported by the client, that is supported by the serving end, and that is used to generate the compressed serving end certificate. The decompressed serving end certificate is obtained by the client by performing decompression processing based on the target compression algorithm.

Optionally, the apparatus further includes: an alarm unit 605, configured to: parse the certificate compression function confirmation field in the received serving end handshake message, and send an alarm message to the serving end when the value of the certificate compression function confirmation field indicates that the target compression algorithm does not belong to the compression algorithm supported by the client or a quantity of target compression algorithms is greater than 1.

Optionally, a value of the certificate compression function field is used to indicate whether the client supports the certificate compression function, the compressed serving end certificate is generated by the serving end by performing compression processing based on a preset compression algorithm, and the decompressed serving end certificate is obtained by the client by performing decompression processing based on the preset compression algorithm.

Optionally, the apparatus further includes: a second serving end certificate message receiving unit 606, configured to: when the client or the serving end does not support a certificate compression function, receive a serving end certificate message that carries an uncompressed serving end certificate and that is sent by the serving end.

Optionally, the apparatus further includes: a client certificate message sending unit 607, configured to: when the certificate request message is received, send a client certificate message to the serving end, where the client certificate message includes a compressed client certificate, and send a certificate verification message to the serving end, where the certificate verification message includes a client signature.

Optionally, the client certificate is obtained by the client by performing compression processing based on the preset compression algorithm; or when the client determines the corresponding target compression algorithm based on the value of the certificate compression function confirmation field in the serving end handshake message, the client certificate is obtained by the client by performing compression processing based on the target compression algorithm.

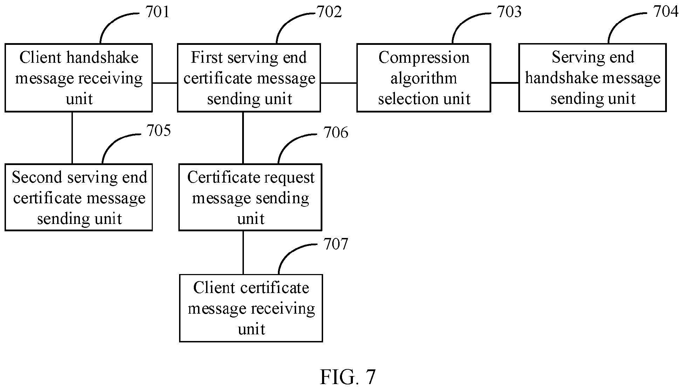

In response to the above-mentioned method embodiments, this specification further provides another identity verification apparatus in a handshake process, applied to a serving end. As shown in FIG. 7, the apparatus includes: a client handshake message receiving unit 701, configured to receive a client handshake message sent by a client, where the client handshake message includes a certificate compression function field, and the certificate compression function field indicates that the client supports a certificate compression function; and a first serving end certificate message sending unit 702, configured to send a serving end certificate message to the client in response to the client handshake message, where the serving end certificate message includes a compressed serving end certificate, so that the client decompresses the compressed serving end certificate included in the serving end certificate message, and performs identity verification on the serving end based on an obtained decompressed serving end certificate.

Optionally, a value of the certificate compression function field is used to indicate a compression algorithm supported by the client, and the apparatus further includes: a compression algorithm selection unit 703, configured to select, from the compression algorithm supported by the client, a target compression algorithm supported by the serving end, to generate the compressed serving end certificate; and a serving end handshake message sending unit 704, configured to send a serving end handshake message to the client in response to the client handshake message, where the serving end handshake message includes a certificate compression function confirmation field, and a value of the certificate compression function confirmation field corresponds to the target compression algorithm.

Optionally, a value of the certificate compression function field is used to indicate whether the client supports the certificate compression function, the compressed serving end certificate is generated by the serving end by performing compression processing based on a preset compression algorithm, and the decompressed serving end certificate is obtained by the client by performing decompression processing based on the preset compression algorithm.

Optionally, the apparatus further includes: a second serving end certificate message sending unit 705, configured to: when the serving end or the client does not support the certificate compression function, send, to the client, a serving end certificate message that carries an uncompressed serving end certificate.

Optionally, the apparatus further includes: a certificate request message sending unit 706, configured to send a certificate request message to the client; a client certificate message receiving unit 707, configured to receive a client certificate message and a certificate verification message that are sent by the client in response to the certificate request message, where the client certificate message includes a compressed client certificate, and the certificate verification message includes a client signature; and a client identity verification unit, configured to: in response to the client certificate message, decompress the compressed client certificate included in the message, and perform identity verification on the client based on an obtained decompressed client certificate and the client signature.

Optionally, the client certificate is obtained by the client by performing compression processing based on the preset compression algorithm; or when the client determines the corresponding target compression algorithm based on the value of the certificate compression function confirmation field in the serving end handshake message, the client certificate is obtained by the client by performing compression processing based on the target compression algorithm.

For an implementation process of functions and roles of each unit in the apparatus, references can be made to an implementation process of corresponding steps in the foregoing method. Details are not described here again.

The system, apparatus, module, or unit illustrated in the above-mentioned embodiments can be specifically implemented by using a computer chip or an entity, or can be implemented by using a product having a certain function. A typical implementation device is a computer, and a specific form of the computer can be a personal computer, a laptop computer, a cellular phone, a camera phone, a smartphone, a personal digital assistant, a media player, a navigation device, an email receiving/sending device, a game console, a tablet computer, a wearable device, or a combination of any several of these devices.

In a typical configuration, the computer includes one or more central processing units (CPUs), an input/output interface, a network interface, and a memory.

The memory may include a non-persistent memory, a random access memory (RAM), a nonvolatile memory, and/or another form in a computer-readable medium, for example, a read-only memory (ROM) or a flash memory (flash RAM). The memory is an example of the computer-readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a disk memory, a quantum memory, a graphene - based storage medium, another magnetic storage device, or any other non-transmission medium. The computer storage medium can be configured to store information that can be accessed by a computing device. As described in this specification, the computer-readable medium does not include computer-readable transitory media (transitory media) such as a modulated data signal and a carrier.

In one or more embodiments of this specification, the terms "include", "comprise", or any other variant thereof are intended to cover a non-exclusive inclusion such that a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product, or device that includes the element.

Terms used in one or more embodiments of this specification are merely used to describe specific embodiments, and are not intended to limit the one or more embodiments of this specification. The terms "a", "said", and "the" of singular forms used in one or more embodiments of this specification and the appended claims are also intended to include plural forms, unless otherwise specified in the context clearly. It should be further understood that the term "and/or" used in this specification indicates and includes any or all possible combinations of one or more associated listed items.

It should be understood that although terms "first", "second", "third", etc. may be used in one or more embodiments of this specification to describe various types of information, the information is not limited to these terms. These terms are merely used to differentiate between information of the same type. For example, without departing from the scope of one or more embodiments of this specification, first information can also be referred to as second information, and similarly, the second information can be referred to as the first information. Depending on the context, for example, the word "if" used here can be explained as "while", "when", or "in response to determining".

The foregoing descriptions are merely example embodiments of one or more embodiments of this specification, but are not intended to limit the one or more embodiments of this specification. Any modification, equivalent replacement, improvement, etc. made without departing from the spirit and principle of the one or more embodiments of this specification shall fall within the protection scope of the one or more embodiments of this specification.

## Claims

1. An identity verification method in a handshake process for a TLCP protocol, comprising:
sending, by a client, a client hello message to a serving end, wherein the client hello message comprises a certificate compression function field, and the certificate compression function field indicates that the client supports a certificate compression function;
sending, by the serving end, a serving end certificate message to the client when the serving end receives the client hello message, wherein the serving end certificate message comprises a compressed serving end certificate; and
in response to the serving end certificate message, decompressing, by the client, the compressed serving end certificate comprised in the serving end certificate message, and performing identity verification on the serving end based on an obtained decompressed serving end certificate.

2. The method according to claim 1, wherein a value of the certificate compression function field is used to indicate a compression algorithm supported by the client, and the method further comprises:
selecting, by the serving end from the compression algorithm supported by the client, a target compression algorithm supported by the serving end, to generate the compressed serving end certificate; and
sending, by the serving end, a serving end hello message to the client in response to the client hello message, wherein the serving end hello message comprises a certificate compression function confirmation field, and a value of the certificate compression function confirmation field corresponds to the target compression algorithm, wherein
the decompressed serving end certificate is obtained by the client by performing decompression processing based on the target compression algorithm.

3. The method according to claim 2, wherein the method further comprises:
parsing, by the client, the certificate compression function confirmation field in the received serving end hello message, and sending an alarm message to the serving end when the value of the certificate compression function confirmation field indicates that the target compression algorithm does not belong to the compression algorithm supported by the client or a quantity of target compression algorithms is greater than 1.

4. The method according to claim 1, wherein a value of the certificate compression function field is used to indicate whether the client supports the certificate compression function, the compressed serving end certificate is generated by the serving end by performing compression processing based on a preset compression algorithm, and the decompressed serving end certificate is obtained by the client by performing decompression processing based on the preset compression algorithm.

5. The method according to claim 1, further comprising:
when the serving end or the client does not support the certificate compression function, sending, by the serving end to the client, a serving end certificate message that carries an uncompressed serving end certificate.

6. The method according to any one of claims 1 to 4, further comprising:
sending, by the serving end, a certificate request message to the client;
when the client receives the certificate request message, sending, by the client, a client certificate message to the serving end, wherein the client certificate message comprises a compressed client certificate, and sending, by the client, a certificate verification message to the serving end, wherein the certificate verification message comprises a client signature; and
in response to the client certificate message, decompressing, by the serving end, the compressed client certificate comprised in the client certificate message, and performing identity verification on the client based on an obtained decompressed client certificate and the client signature comprised in the received certificate verification message.

7. The method according to claim 6, wherein the client certificate is obtained by the client by performing compression processing based on the preset compression algorithm; or
when the client determines the corresponding target compression algorithm based on the value of the certificate compression function confirmation field in the serving end hello message, the client certificate is obtained by the client by performing compression processing based on the target compression algorithm.

8. An identity verification method in a handshake process, applied to a client, wherein the method comprises:
sending a client handshake message to a serving end, wherein the client handshake message comprises a certificate compression function field, and the certificate compression function field indicates that the client supports a certificate compression function;
receiving a serving end certificate message sent by the serving end, wherein the serving end certificate message comprises a compressed serving end certificate; and
in response to the serving end certificate message, decompressing the compressed serving end certificate comprised in the serving end certificate message, and performing identity verification on the serving end based on an obtained decompressed serving end certificate.

9. The method according to claim 8, wherein a value of the certificate compression function field is used to indicate a compression algorithm supported by the client, and the method further comprises:
receiving a serving end handshake message sent by the serving end to the client in response to the client handshake message, wherein the serving end handshake message comprises a certificate compression function confirmation field, a value of the certificate compression function confirmation field corresponds to a target compression algorithm, and the target compression algorithm is a target compression algorithm that is selected by the serving end from the compression algorithm supported by the client, that is supported by the serving end, and that is used to generate the compressed serving end certificate, wherein
the decompressed serving end certificate is obtained by the client by performing decompression processing based on the target compression algorithm.

10. The method according to claim 9, further comprising:
parsing the certificate compression function confirmation field in the received serving end handshake message, and sending an alarm message to the serving end when the value of the certificate compression function confirmation field indicates that the target compression algorithm does not belong to the compression algorithm supported by the client or a quantity of target compression algorithms is greater than 1.

11. The method according to claim 8, wherein a value of the certificate compression function field is used to indicate whether the client supports the certificate compression function, the compressed serving end certificate is generated by the serving end by performing compression processing based on a preset compression algorithm, and the decompressed serving end certificate is obtained by the client by performing decompression processing based on the preset compression algorithm.

12. The method according to claim 8, further comprising:
when the client or the serving end does not support a certificate compression function, receiving, by the client, a serving end certificate message that carries an uncompressed serving end certificate and that is sent by the serving end.

13. The method according to any one of claims 8 to 11, further comprising:
when a certificate request message is received, sending a client certificate message to the serving end, wherein the client certificate message comprises a compressed client certificate, and sending a certificate verification message to the serving end, wherein the certificate verification message comprises a client signature.

14. The method according to claim 13, wherein the client certificate is obtained by the client by performing compression processing based on the preset compression algorithm; or
when the client determines the corresponding target compression algorithm based on the value of the certificate compression function confirmation field in the serving end handshake message, the client certificate is obtained by the client by performing compression processing based on the target compression algorithm.

15. An identity verification method in a handshake process, applied to a serving end, wherein the method comprises:
receiving a client handshake message sent by a client, wherein the client handshake message comprises a certificate compression function field, and the certificate compression function field indicates that the client supports a certificate compression function; and
sending a serving end certificate message to the client in response to the client handshake message, wherein the serving end certificate message comprises a compressed serving end certificate, so that the client decompresses the compressed serving end certificate comprised in the serving end certificate message, and performs identity verification on the serving end based on an obtained decompressed serving end certificate.

16. The method according to claim 15, wherein a value of the certificate compression function field is used to indicate a compression algorithm supported by the client, and the method further comprises:
selecting, from the compression algorithm supported by the client, a target compression algorithm supported by the serving end, to generate the compressed serving end certificate; and
sending a serving end handshake message to the client in response to the client handshake message, wherein the serving end handshake message comprises a certificate compression function confirmation field, and a value of the certificate compression function confirmation field corresponds to the target compression algorithm.

17. The method according to claim 15, wherein a value of the certificate compression function field is used to indicate whether the client supports the certificate compression function, the compressed serving end certificate is generated by the serving end by performing compression processing based on a preset compression algorithm, and the decompressed serving end certificate is obtained by the client by performing decompression processing based on the preset compression algorithm.

18. The method according to claim 15, further comprising:
when the serving end or the client does not support the certificate compression function, sending, by the serving end to the client, a serving end certificate message that carries an uncompressed serving end certificate.

19. The method according to any one of claims 15 to 17, further comprising:
sending a certificate request message to the client;
receiving a client certificate message and a certificate verification message that are sent by the client in response to the certificate request message, wherein the client certificate message comprises a compressed client certificate, and the certificate verification message comprises a client signature; and
in response to the client certificate message, decompressing the compressed client certificate comprised in the client certificate message, and performing identity verification on the client based on an obtained decompressed client certificate and the client signature.

20. The method according to claim 19, wherein the client certificate is obtained by the client by performing compression processing based on the preset compression algorithm; or
when the client determines the corresponding target compression algorithm based on the value of the certificate compression function confirmation field in the serving end handshake message, the client certificate is obtained by the client by performing compression processing based on the target compression algorithm.

21. A computer-readable storage medium, wherein the computer-readable storage medium stores a computer program, and when the program is executed by a processor, the method according to any one of claims 8 to 14 or 15 to 20 is implemented.

22. An electronic device, comprising a memory, a processor, and a computer program that is stored in the memory and that is capable of running on the processor, wherein when the processor executes the program, the method according to any one of claims 8 to 14 or 15 to 20 is implemented.
